# EUROPEAN PATENT APPLICATION

(11) **EP 1 657 267 A1**
(43) Date of publication of application: **17.05.2006**
(21) Application number: 04300781.4
(22) Date of filing: 10.11.2004
(51) Int. Cl.: C08G 18/79, C08G 18/08, G02B 1/04

(54) **Two-part polyisocyanate/polyol composition and its use for making casted products, in particular ophthalmic lenses**

(71) Applicant: INSA (Institut National des Sciences Appliqées), 69100 VILLEURBANNE (FR)
(72) Inventor: Lesartre, Noémie, 75001, PARIS (FR); Mechin, Françoise, 69006, LYON (FR); Pascault, Jean-Pierre, 69100, VILLEURBANNE (FR)
(74) Representative: Catherine, Alain

(57) **Abstract**

A two-part polyisocyanate/polyol composition, curable upon mixing of the two parts for molding casted products, which comprises :
- a first polyisocyanate part A, liquid at mixing temperature, comprising at least one polyisocyanate compound A1 bearing at least three (3) isocyanate groups and having at least one isocyanurate cycle in its molecule and at least one diisocyanate compound A2 ; and
- a second polyol part B comprising at least one diol compound B1.

## Description

### BACKGROUND OF THE INVENTION

### 1. Field of the invention

The present invention generally concerns two-part polyisocyanate/polyol compositions, curable upon mixing of the two parts, for moulding casted products such as optical articles, in particular ophthalmic lenses.

### 2. Description of related art

Two-part curable compositions are well known and are compositions comprising two reactive compositions, packaged separately, which react with each other upon mixing, either at room temperature or under heating, to give cured products.

Casted products may be moulded from such two-part curable compositions by reaction transfer molding (RTM) process or by reaction injection molding (RIM) process.

Reaction transfer molding process comprises first mixing the two reactive parts of the two-part composition in a statico dynamic mixing zone and then quickly filling the mixture into a mold where the mixture is cured to give the final casted product.

Reaction injection molding process comprises mixing the two reactive parts by jet impingement in a mixing head comprising a mixing chamber connected to a mold cavity by an injection duct associated with a piston forcing the required quantity of mixture to fill under pressure the mold cavity.

Mixing and injecting being very rapid, fast-curing reactants may be used.

Using such a process as the RIM process for molding casted optical articles such as ophthalmic lenses would be of major interest in that it would offer a broader choice of reactants and increase the productivity.

Polyurethane base articles have been made using polyisocyanates and polyols as the reactants.

Japanese Patent Applications n° 10-319 201 and n° 2003-98301 disclose a method for making polyurethane based plastic lenses which comprises pouring (A) an isocyanurate-modified hydrogenated xylene diisocyanate and (B) a compound having two or more active hydrogen groups into a mold and heating to harden the mixture. This method is said to give hardened articles of higher refractive index, high durability and high physical strength. There is no indication of using a RIM process for making plastic lenses.

When using a RIM process for making optical articles such as ophthalmic lenses, not only the reactive composition must be formulated for limiting flow lines formation during mixing of the reactants and obtaining laminar streams for optimization of the mold filling, but it shall also result in a cured final product having required optical and mechanical properties such as high glass transition temperature (Tg), i.e. a Tg of at least 80°C, a modulus E'_{100°C} ≥ 50 MPa, preferably ≥ 100 MPa, and high impact resistance.

### SUMMARY OF THE INVENTION

Thus, an object of the present invention is to provide a two-part polyisocyanate/polyol composition, curable upon mixing of the two parts, for molding casted products such as optical articles, in particular ophthalmic lenses, having high optical (especially high Abbe number), low yellowness and high mechanical properties, in particular a high Tg and a high impact resistance, low specific gravity, good tintability in general, and especially in water based disperse dyes bath and which are preferably suitable in reactive molding process and specifically in a RIM process.

A further object of the present invention is a process for molding casted products using the two-part polyisocyanate/polyol composition of the invention, and preferably by means of a RIM process.

Another object of the present invention is to provide a lens material usable in spectacles necessitating a drilling of the lenses, and which are specifically adapted for limiting or suppressing crakings due to the stress during wear of the spectacles.

The above goals are achieved, according to the present invention, by providing a two-part polyisocyanate/polyol composition, curable upon mixing of the two parts for molding casted products, which comprises :
- a first polyisocyanate part A, liquid at the mixing temperature, comprising at least one polyisocyanate compound A1 bearing at least three (3) isocyanate groups and having at least one isocyanurate cycle in its molecule and at least one diisocyanate compound A2 ; and
- a second polyol part B comprising at least one diol compound B1.

The invention also concerns a process for making a casted article such as an optical article, in particular an ophthalmic lens which comprises mixing and reacting in a mold first polyisocyanate part A and second polyol part B of the above two-part composition and preferably through a RIM process.

The invention further concerns an optical article, in particular an ophthalmic lens, made of a cured product resulting from mixing and reacting the two parts of the above two-part polyisocyanate/polyol composition.

### DETAILLED DESCRIPTION OF THE INVENTION

As indicated above, the first polyisocyanate part A of the two-part composition of the invention comprises at least one polyisocyanate compound A1 bearing at least three (3), preferably three (3), isocyanate groups and having at least one (1), preferably one, isocyanurate cycle in its molecule.

The isocyanate groups of the compounds A1 may be linked, directly or indirectly, to a nitrogen atom of the isocyanurate cycles through a cycloalkylene and/or a polycycloalkylene group.

By directly or indirectly linked to a nitrogen atom, it is meant that the cycloalkylene and/or polycycloalkylene group bearing the isocyanate group (NCO) is either linked by one of its carbon atoms or through an alkylene chain, preferably a methylene or poly(methylene) chain, to the nitrogen atom of the isocyanurate cycle.

Preferably, the cycloalkylene and polycycloalkylene groups are C₆₋C₁₅ preferably C₆ to C₁₀ cycloalkylene or polycycloalkylene groups, which may be substituted by one or more alkyl groups, preferably C₁-C₆ alkyl groups and more preferably CH₃ groups.

Especially, cycloalkylene groups can be chosen between the following cycles:

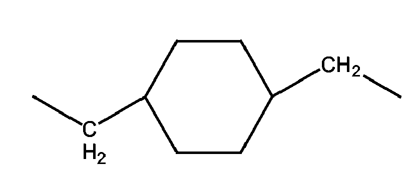

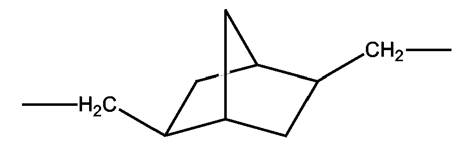

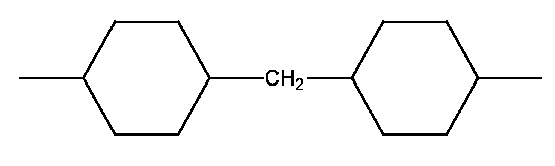

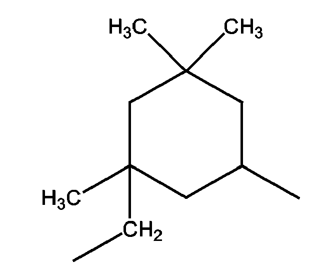

Preferably, the above defined polyisocyanate compounds A1 bear 3 isocyanate groups each linked, directly or indirectly, to a nitrogen atom of the isocyanurate cycle through a cycloalkylene and/or polycycloalkylene group.

Preferred polyisocyanate compounds A1 having isocyanate groups linked to the isocyanurate cycle through cycloalkylene and/or polycycloalkylene groups are those of formula (I) : 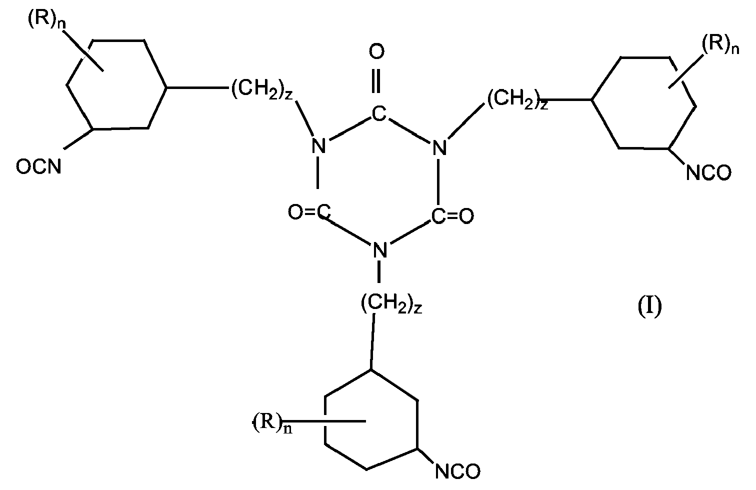 in which each R is, independently from each other, a C₁-C₆ alkyl group, preferably a CH₃ group, z is an integer from 0 to 6, preferably z is 1 or 2, and n is an integer from 0 to 10, preferably n is 1 to 3.

A most preferred polyisocyanate compound A1 is compound of formula (IA) :

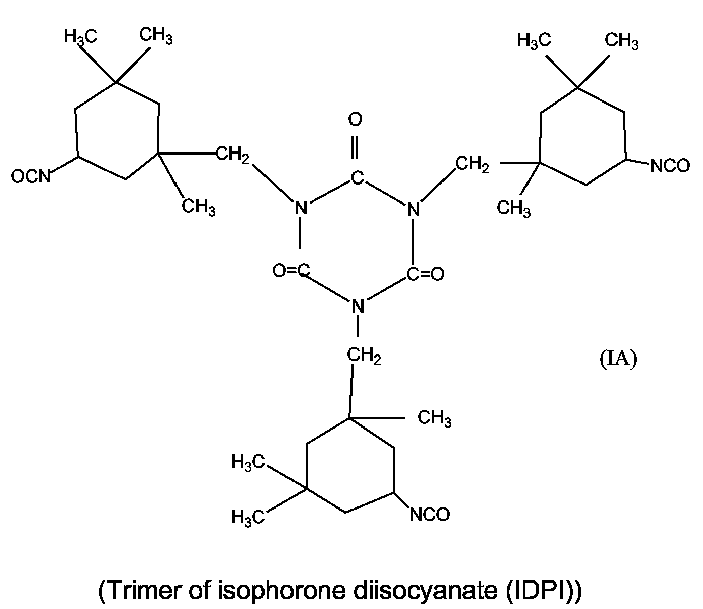

The isocyanate group (NCO) of the compounds A1 may also be linked to a nitrogen atom of the isocyanate cycles through an alkylene group, preferably a poly(methylene) group (CH₂ )_{z} where z is an integer from 1 to 12, preferably an integer from 2 to 8, more preferably 4, 6 or 8, and better z is 6.

Preferred polyisocyanate compounds A1 having isocyanate groups linked through an alkylene group are polyisocyanate compounds A1 of formula (II) : 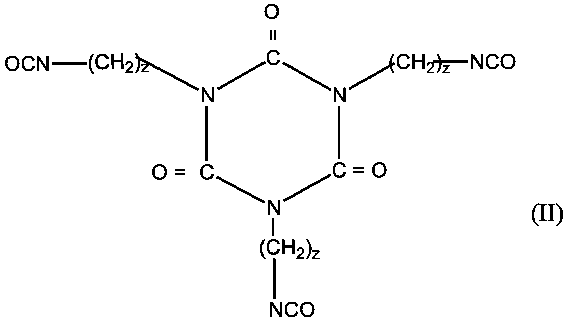 where z is an integer from 1 to 12, preferably 2 to 8 and more preferably z=6.

Thus, a preferred polyisocyanate of formula (II) is polyisocyanate of formula (IIA) :

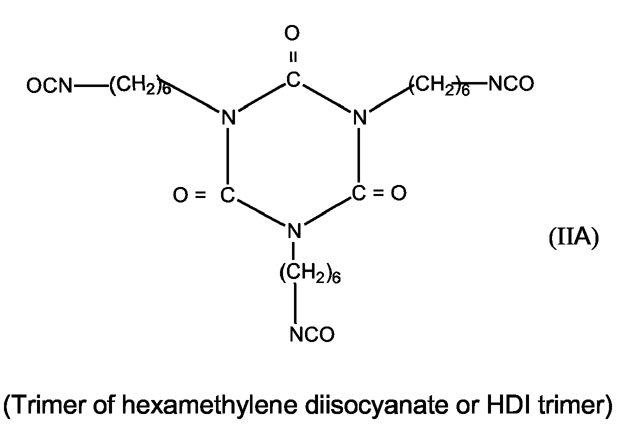

Preferably, first polyisocyanate part A of the present compositions comprises solely polyisocyanate compounds A1 having at least one isocyanate group, preferably all three isocyanate groups, linked to the isocyanurate cycle through a cycloalkylene and/or polycycloalkylene group or it comprises a mixture of at least one first polyisocyanate compound A1 having at least one isocyanate group, preferably all three isocyanate groups, linked to the isocyanurate cycle through a cycloalkylene and/or polycycloalkylene group and at least one second polyisocyanate compound A1 having at least one, preferably all three, isocyanate group linked to the isocyanurate cycle through an alkylene, preferably a poly(methylene), group.

Preferred mixtures are mixtures of polyisocyanate compounds A1 of formulas (I) and (II) and more preferably of formulas (IA) and (IIA).

Typically, first polyisocyanate part A comprises 5 to 90 parts, preferably 10 to 90 parts, more preferably 40 to 90 parts, by weight of polyisocyanate compounds A1 per 100 parts by weight of polyisocyanate compounds A1 and diisocyanate compounds A2 present in first polyisocyanate part A.

When there is used a mixture of at least one first polyisocyanate compound A1 having at least one isocyanate group linked to the isocyanurate cycle through a cycloalkylene and/or polycycloalkylene group and at least one second polyisocyanate compound A1 having at least one isocyanate group linked to the isocyanurate cycle through an alkylene group, in particular a mixture of polyisocyanate of formulas (I) and (II), the first polyisocyanate part A comprises typically 15 to 50, preferably 25 to 35, parts by weight of first polyisocyanate compounds A1, and conversely 85 to 50 parts, preferably 75 to 65 parts by weight of second polyisocyanate compounds A1, per 100 parts by weight of polyisocyanate compounds A1 present in first polyisocyanate part A.

The second essential component of first polyisocyanate part A of the two-part composition of the invention is a diisocyanate compound A2 or a mixture of diisocyanate compounds A2.

The diisocyanate compounds A2 can be chosen among aromatic diisocyanates, aliphatic diisocyanates, cycloaliphatic diisocyanates and polycycloaliphatic diisocyanates and mixtures thereof.

Among the aromatic diisocyanates there may be cited 4,4'-diphenylmethane diisocyanate, 2,4'-diphenylmethane diisocyanate, 2,2'-diphenylmethane diisocyanate, 2,4-toluene diisocyanate, 2,6-toluene diisocyanate, 4,4'-diphenyl ether diisocyanate, 2-nitrodiphenyl-4,4'-diisocyanate, 2,2'-diphenylpropane-4,4'-diisocyanate, 3,3'-dimethylphenylmethane-4,4'-diisocyanate, 4,4'-diphenylpropane diisocyanate, o-phenylene diisocyanate, *m*-phenylene diisocyanate, p-phenylene diisocyanate, 1,4-naphtalene diisocyanate, 1,5-naphtalene diisocyanate, 3,3-dimethoxydiphenyl-4,4'-diisocyanate, o-xylene diisocyanate, *m*-xylene diisocyanate(xylylene diisocyanate XDI), *p-*xylene diisocyanate and tetramethylxylene diisocyanate.

Preferred aromatic diisocyanate is xylylene diisocyanate (XDI).

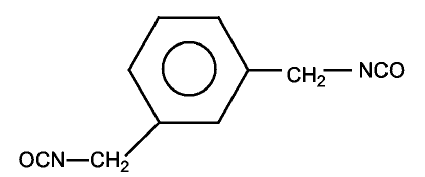

Among the aliphatic diisocyanates there may be cited poly(methylene) diisocyanates such as 1,4-tetramethylene diisocyanate and 1,6-hexamethylene diisocyanate (HDI). The preferred aliphatic diisocyanate is HDI.

Among the cycloaliphatic and polycycloaliphatic diisocyanates there may be cited isophorone diisocyanate (IPDI), norbornyle diisocyanate (N_{b}DI), dicyclohexyl methane diisocyanates, in particular 4,4'- dicyclohexyl methane diisocyanate (H₁₂MDI), hydrogenated xylene diisocyanates, hydrogenated toluene diisocyanates, and hydrogenated tetramethylxylene diisocyanates. Preferred cycloaliphatic and polycycloaliphatic diisocyanates are:
Isophorone diisocyanate (IDPI) 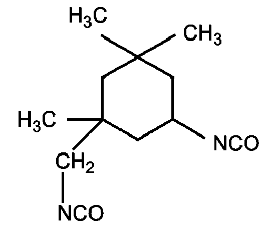
4,4'-dicyclohexylmethane diisocyanate (H₁₂MDI) 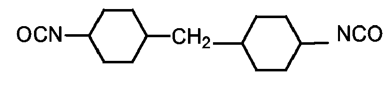
Norbornyl diisocyanate (N_{b}DI) 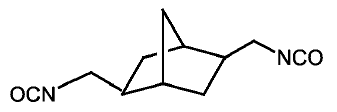 It is also possible to use NCO terminated prepolymers having a number average molecular weight equal or higher than 500, preferably between 700 to 3000g/mol.

### For example

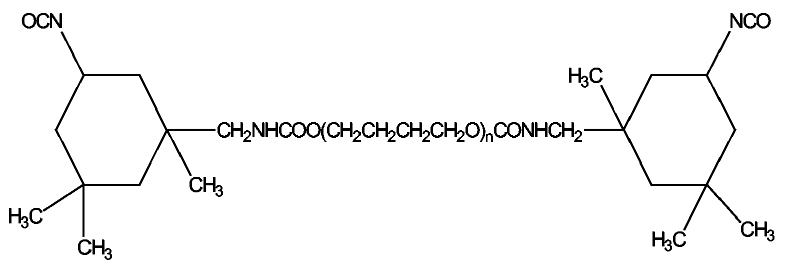

Having a M̅ₙ of 1550g./mol.

It is also possible to use as component A2 a diisocyanate prepolymer obtained by reacting the above NCO terminated monomers and/or prepolymers with a diol, the NCO monomers and/or prepolymers being used in excess (Molar Ratio NCO/OH>1).

Typically first polyisocyanate part A comprises 90 to 10, preferably 60 to 10, parts by weight of polyisocyanate compounds A1 per 100 parts of polyisocyanate compounds A1 and diisocyanate compounds A2.

The second polyol part B of the two-part composition comprises a diol or a mixture of diols B1. Preferably the diol or mixture of diols B1 represents at least 50%, and more preferably 100%, by weight based on the total weight of polyols present in second polyol part B.

The diols B1 may be chosen among alcanediols, cycloalkylenediols, polycycloalkylenediols, dihydroxylated polycaprolactones, polycarbonatediols, polytetrahydrofurans, alkoxylated bisphenols and dihydroxylated polyurethan prepolymers.

Useful alcane diols are typically C₁-C₈ alcane diols, preferably C₁₋C₆ alcane diols. The preferred alcane diols are 1,4-butanediol, 2-ethyl-1,3-hexanediol, CH₃CH₂CH₂CH(OH)CH(C₂H₅)CH₂OH.

Useful cycloalkylenediols are typically C₅-C₈ cycloalkylenediols and preferably C₆ cycloalkylenediols.

The preferred cycloalkylenediol is 1,4-cyclohexane dimethanol

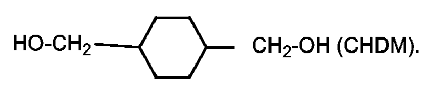

Polycycloalkylenediols can be bicyclocompounds or condensed cyclocompounds. The preferred polycycloalkylenediol is tricyclodecane-4,8-dimethanol 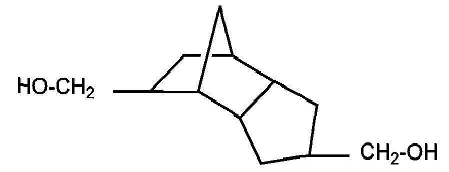 (TCD).

Dihydroxylated polycaprolactones are commercially available compounds, in particular they are commercialized under tradenames CAPA 2054®, CAPA 2200®, CAPA 2085® and CAPA 2152® by SOLVAY.

Preferred polycarbonate diols are compounds or mixtures of compounds of general formulas : 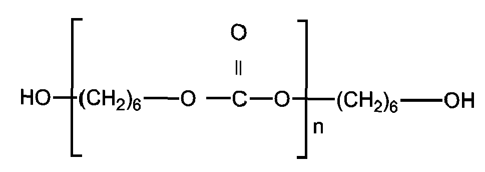 or 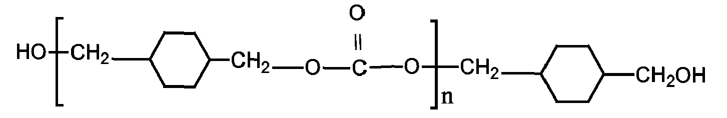 where n is such that the number average molecular weight Mₙ ranges from 500 to 2000g./mol.

Such polycarbonate diols are commercially available, for example under tradenames UH-carb 50® or ETARNACOLL ® UH 50, UH-carb 100® or ETARNACOLL® UH 100, UH-carb 200® or ETARNACOLL® UH 200, UC-carb 100® or ETARNACOLL UC100 and UM-carb 90® by UBE Industries.

Polytetrahydrofurans are compounds of general formula : 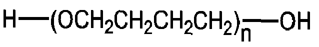 where n is such that the number average molecular weight Mₙ ranges from 500 to 2000 g./mole. Such polytetrahydrofurans are commercially available under tradenames Terathane 650® and Terathane 1000® by DUPONT.

Alkoxylated bisphenols, in particular alkoxylated bisphenols-A such as ethoxylated and propoxylated bisphenols-A, are well known materials and commercially available, for example under tradenames Dianol® and Simulsol® by SEPPIC.

Typically, ethoxylated and propoxylated bisphenols-A are compounds of formula : 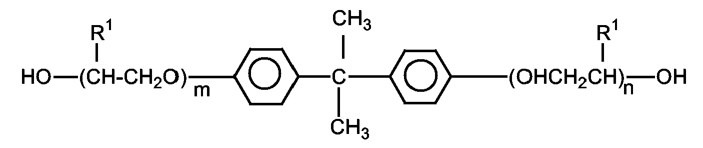 with R¹ = H or CH₃ and m+n ranging from 2 to 10, preferably 2 to 6.

Another class of preferred diols are dihydroxylated polyurethane prepolymers. These prepolymers can be prepared by reacting an excess of one or more diol monomers with one or more diisocyanate monomers. Generally, these dihydroxylated polyurethane prepolymers have a number average molecular weight Mₙ ranging from 500 to 10000g./mol., preferably 1500 to 5000g./mol.

Examples of such prepolymers are :
- Tricyclodecane-4,8 dimethanol (TCD) / poly-1,4 butanediol-isophoronediisocyanate terminated prepolymers (3/1)
- 1,4-Cis-trans(cyclohexaneddimethanol) (CHDM) / poly-1,4-butanediol isophoronediisocyanate terminated prepolymers (3/1)

Of course, mixtures of the above diols can also be used.

The most preferred diol compounds B1 are TCD, CHDM, dihydroxylated polyurethane prepolymers and mixtures thereof.

The second polyol part B can also include other higher polyols such as triols and tetrols.

Examples of the triols are glycerol, propoxylated glycerol, trimethylolpropane, ethoxylated and propoxylated trimethylolpropane and trihydroxylated polycaprolactones.

Examples of tetrols are pentaerythritol and ethoxylated and propoxylated pentaerythritol.

Generally, the molar ratio NCO/OH of first polyisocyanate part A to second polyol part B ranges preferably from. 0.9 to 1.3, more preferably from 1 to 1.2, and even better from 1 to 1.1.

When A comprises more than 25 weight %, preferably more than 30% of at least one isocyanate group linked to the isocyanate cycle through a cycloalkyl group, one preferably uses a polyol part B comprising at least one flexible diol prepolymer such as polytetrahydrofuran, dihydroxylated polyurethane prepolymer especially those as described above.

First polyisocyanate part A and/or second polyol part B may also include urethane forming catalysts and usual additives such as UV absorbing agents, antioxidants, anticoloring agents, pigments, dyes and surfactants in the usual amounts.

Urethane forming catalysts include known organometallic salts such as dibutyl tin dilaurate, dimethyl tin dichloride, bismuth stearate, bismuth oleate and tertiary amines such as triethylamine and triethylenediamine.

Curing of the two-part composition, after mixing of first polyisocyanate and second polyol parts A and B can be effected at a temperature ranging from 20 to 250°C, preferably from 50 to 150°C.

Preferably, the two part composition of the present invention is used in a reaction injection moulding (RIM) process.

Preferably polyisocyanate part A and polyol part B have each a dynamic viscosity ranging from 0.03 Pa.s and 0.3 Pa.s, when polyisocyanate part A and polyol part B are mixed.

More preferably, the miscibility temperature of polyisocyanate part A and polyisocyanate part B is equal or less than the temperature of the two part composition when the mixing is implemented.

The following examples illustrate the present invention.

### Example 1

Ophthalmic lenses (lens power -2.00 dioptries ; mean center thickness 1.07 or 1.47 mm) are made using the following two-part polyisocyanate/polyol composition.

**COMPOSITION PU1**

| | % by weight |
|---|---|
| Polyisocyanate part A | |
| -Trimer of IPDI (Vestanat T1890/100® from DEGUSSA) | 25 |
| - Trimer of HDT (Tolonat HDT® from RHODIA) | 60 |
| -IPDI (VESTANAT IPDI from DEGUSSA) | 15 |

| Polyol part B | |
|---|---|
| - TCD (Tricyclodecanedimethanol) From Grau Aromatics | 60 |
| - Polycarbonate diol* ETARNACOLL UM 90 from UBE industries) | 20 |
| - Polycaprolactone diol (CAPA 2043® from SOLVAY) | 20 |

| | |
|---|---|
| * Copolymer cyclohexanedimethanol / 1,6-hexanediol (3/1) | |

### Preparation of polyisocyanate part A

300g of polyisocyanate part A are prepared by mixing 75g of Vestanat 1890T®, 180g of Tolonate HDT® and 45g IPDI in a 500 ml glass flask.

Granules of Vestanat 1890T® are dispersed and solubilized in the two other liquid isocyanates under inert atmosphere (argon) with agitation and heating at 80°C up to complete dissolution of the granules (about 4 hours).

### Preparation of polyol part B

The three monomers are liquids. However, TCD is very viscous and is preheated to 90°C. All three monomers are then mixed together and homogenized in a 500 ml glass flask at a temperature of 80°C.

Both solutions are degassed under vacuum for half an hour.

### Ophthalmic lens molding

20g of polyisocyanate part A are placed in a glass flask and heated to 60°C.

15.03g of polyol part B are taken with a syringe and heated in an oven at 75°C for 15 minutes.

Part B is introduced in the flask containing part A and the mixture is agitated and degassed for about 5 minutes.

15 ml of the resulting reactive mixture are taken with a syringe and introduced in the mold cavity of a classical two part glass mold preheated to 75°C for avoiding demixtion of the reactants.

The temperature of the filled mold is increased from 80°C to 130°C in half an hour and maintained at 130°C for 6 hours.

Thereafter, the temperature is lowered to 80°C in half an hour and the mold is disassembled and the cured casted lens is recovered.

Finally, the recovered lens is annealed in an oven at 130°C for 2 hours (to eliminate residual stresses).

The casted ophthalmic lenses made as above have the following properties :

| | |
|---|---|
| Specific gravity: | 1.18 |
| Refractive index : | nₑ²⁰ = 1.5247 |
| | n_{D} ²⁰ = 1.5221 |
| Abbe Number: | γₑ = 53 |
| | γ_{D} = 53 |

The two-part composition of example 1 can be processed using the RIM process.

### Example 2

Ophthalmic lenses -2.00 power: 1.5 mm center thickness are made using the following two-part polyisocyanate/polyol composition :

**COMPOSITION PU2**

| | % by weight |
|---|---|
| Polyisocyanate part A | |
| - Trimer of IPDI (Vestanat T1890/100 from DEGUSSA) | 50 |
| - IPDI (VESTANAT IPDI from DEGUSSA) | 50 |

| Polyol part B | |
|---|---|
| - Prepolymer TCD/ poly-1,4-butanediol IPDI terminated (3/1) | 60 |
| - TCD (tricyclodecanedimethanol From Grau aromatics) | 40 |

### Preparation of diol prepolymer

TCD and poly-(1,4-butanediol)IPDI terminated are mixed in the proportion of 3 moles of OH function (TCD) for 1 mole of isocyanate function (Poly-1,4-butanediol IPDI terminated). The mixture is homogenized and heated at 80°C under argon and the end of the prepolymer synthesis is controlled by Infra Red spectroscopy.

### Preparation of polyol part B

TCD is added to the prepolymer and the mixture is homogenized and degassed at 80°C for half an hour.

### Preparation of polyisocyanate part A

50g of Vestanat T890/100® and 50g IPDI are introduced in a glass flask.

The granules of Vestanat T1890T/100T® are solubilized in IPDI with agitation under inert atmosphere at 80°C for 1 day. The resulting solution is degassed for half an hour.

### Ophthalmic lens molding

20.24g of polyol part B are taken and degassed with agitation at 95°C for half an hour.

16.26g of polyisocyanate part A are taken and heated in an oven at 95°C for 15 minutes.

Polyisocyanate and polyol parts A and B are then mixed in a glass flask and degassed for 5 minutes.

The resulting mixture is poured to fill the molding cavity of a glass mold preheated at 85°C and lenses are then molded as in example 1.

### Example 3

Ophthalmic lenses -2.00 power 1.5 center thickness are made using the following two-part polyisocyanate/polyol composition :

**COMPOSITION PU3**

| | % by weight |
|---|---|
| Polyisocyanate part A | |
| -Trimer of IPDI (Vestanat 1890T®) | 50 |
| -IPDI (VESTANAT IPDI from DEGUSSA) | 50 |

| Polyol part B | |
|---|---|
| - Prepolymer CHDM/ poly-1,4-butanediol IPDI terminated (3/1) | 65 |
| - CHDM | 35 |

### Preparation of prepolymer CHDM/ poly-1,4-butanediol IPDI terminated (3/1)

The prepolymer is prepared as in example 2 but replacing TCD by CHDM.

### Preparation of polyol part B

The preparation is similar to that of example 2 but replacing TCD by CHDM and using proportions of 65% prepolymer and 35% CHDM.

### Preparation of polyisocyanate part A

Same as in example 2.

### Ophthalmic lens molding

17.19g of polyol part B are taken and degassed with agitation at 95°C for half an hour.

16.26g of polyisocyanate part A are taken with a syringe and heated in an oven at 95°C for 15 minutes.

Parts A and B are then mixed in a glass flask and degassed for 5 minutes.

The resulting mixture is poured to fill the molding cavity of a glass mold preheated at 85°C and lenses are then molded as in example 1.

### Example 4

Ophthalmic lenses -2.00 power 1.5 center thickness are made using the following two-part polyisocyanate/polyol composition:

**COMPOSITION PU4**

| | % by weight |
|---|---|
| Polyisocyanate part A | |
| -Trimer of IPDI (Vestanat T1890/100®) | 50 |
| -IPDI (VESTANAT IPDI from DEGUSSA) | 50 |

| Polyol part B | |
|---|---|
| - CHDM | 100 |

Polyisocyanate part A is obtained as disclosed in example 2.

### Ophthalmic lens molding

5.87g of CHDM are introduced in a glass flask. 12.5g of polyisocyanate part A are then added. The mixture is homogenized and degassed at 70°C for 5 minutes.

The resulting mixture is poured to fill the molding cavity of a glass mold preheated at 85°C and lenses are then molded as in example 1.

The two-part composition of this example can be processed using a RIM process.

### Example 5

The conservation modulus E' at 25°C and 100°C of the lenses of examples 1 to 4 are determined by dynamic mechanical analysis (DMA), using a planar sample of the material and a 3 points flexion method.

The results are given in the table below :

| Examples | E'25°C | E'100°C | Tα |
|---|---|---|---|
| | MPA | MPA | °C |
| 1 | 2930 | 60 | 100 |
| 2 | 3212 | 246 | 130 |
| 3 | 2750 | 287 | 126 |
| 4 | 3401 | 2374 | 147 |

The temperature Tα is measured by dynamic mechanical analysis,
using a planar sample of the material and a 3 point flexion method. Tα is the temperature corresponding to the maximum of tg δ as a function of the temperature with tg δ being defined as E"/E' where E" designates the loss modulus and E' the storage modulus.

### Exemple 6

A first set of lenses of example 1 are coated with a primer coating of polyurethane latex composition (W234 from Baxenden) of 1 µm thickness and an abrasion resistant hard coat also of about 1µm thickness.

The hard coat composition is formulated by adding drop by drop 80.5 parts of HCl 0.1 N in a solution containing 224 parts of γ-glycydoxypropyltrimethoxysilane and 120 parts of dimethyldiethoxysilane. The hydrolyzed solution is agitated for 24 hours at ambient temperature and then there is added 718 parts of colloidal silica at 30% in methanol, 15 parts of aluminum acetylacetonate and 44 parts of ethylcellosolve. A small quantity of surfactant is then added. The resulting composition has a solid dry extract of about 13% coming from the dimethyldiethoxysilane hydrolyzed.

After dip coating the lenses with the hard coat formulation, the coating is preheated 15 minutes at 60°C. Then the lenses are heated at 100°C for 3 hours in an oven.

Then the obtained lenses are further coated by vacuum vapor deposition with a multilayer anti-reflecting coating AR comprising the following stack of layers (starting from the hard coat).

| | Material | Optical thickness |
|---|---|---|
| First layer | Zr02 | 55 nm |
| Second layer | Si02 | 30 nm |
| Third layer | Zr02 | 160 nm |
| Fourth layer | Si02 | 90 nm |

Impact resistances of uncoated lenses of example 1 and coated lenses (hard coat+AR) have been determined using the ball (520g) drop test, in which balls are dropped with increasing energy onto the middle of the lenses (by increasing the dropping height) up to a maximum energy of the dropped ball (E = 6500mJ). Unbroken lenses are considered to have a rupture energy equal to the maximum of 6500mJ.

Results are given in the table below :

| | Uncoated Lenses | | Coated lenses first set | Coated lenses second set | |
|---|---|---|---|---|---|
| Mean center thickness (mm) | 1.07 | 1.47 | 1.09 | 1.10 | 1.52 |
| Number of lenses tested | 11 | 25 | 14 | 17 | 17 |
| Number of unbroken lenses | 10 | 21 | 0 | 0 | 0 |
| Mean rupture energy (mJ) | >6000 | 6154 | 1852 | 5020 | 4210 |

This example shows that lenses made with two-part compositions of the invention, either uncoated or coated, exhibit very good impact resistance.

### Example 7:

A base 2 lens having no power (2mm center thickness) made according to example 1 is submitted to an impact resistance test according to ANSI Z87.1;

A steel ball of 6.35 mm diameter is impacted on a lens at a speed of 150ft/s (45.72m/s).

The lens passes the test.

### Example 8 :

-2.00 power lenses of 1.5 mm center thickness are made from the 2 part composition of example 1, using the process of example 1.

One then measures their ability to sustain UV ageing.

The lenses are submitted to a UV irradiation in a Suntest apparatus CPS+ (from Hereaus company).

This apparatus uses a Xenon lamp 60000 Klux, 1.5 KW.

The lenses are irradiated during 200 hours.

Yellowness index is determined spectroscopically using ASTM D-1325-63.

Yi=(128X-106 Z)Y where X, Y, Z are trichromatic coordinates of the sample measured using a UV-visible spectrophotometer scanning the spectrum from 380 to 780 nm.

The yellowness index Yi of the lenses before the test is 1.3.

After 200 hours of Suntest, there is no change in the Yi.

A comparison with a commercial lens (made of Trivex®) shows that if the Yellowness index of the lens is 0.3 before the test, it reaches 3.3 after 200 hours.

## Claims

1. A two-part polyisocyanate/polyol composition, curable upon mixing of the two parts for molding casted products, which comprises :
- a first polyisocyanate part A, liquid at mixing temperature, comprising at least one polyisocyanate compound A1 bearing at least three (3) isocyanate groups and having at least one isocyanurate cycle in its molecule and at least one diisocyanate compound A2 ; and
- a second polyol part B comprising at least one diol compound B1.

2. The two-part composition of claim 1, wherein said at least one polyisocyanate compounds A1 comprises at least one isocyanate group linked, directly or indirectly, to a nitrogen atom of said at least one isocyanurate cycle through a cycloalkylene and/or polycycloalkylene group.

3. The two-part composition of claim 1, wherein the three isocyanate groups are each linked, directly or indirectly, to a nitrogen atom of said at least one isocyanurate cycle through a cycloalkylene and/or polycycloalkylene group.

4. The two-part composition of claim 2, wherein the cycloalkylene or polycycloakylene groups are C₆-C₁₅ cycloalkylene or polycycloalkylene groups which may be substituted by one or more alkyl groups.

5. The two-part composition of claim 3, wherein the cycloalkylene or polycycloakylene groups are C₆-C₁₅ cycloalkylene or polycycloalkylene groups which may be substituted by one or more alkyl groups.

6. The two-part composition of claim 1, wherein said at least one polyisocyanate compound A₁ has formula (I): 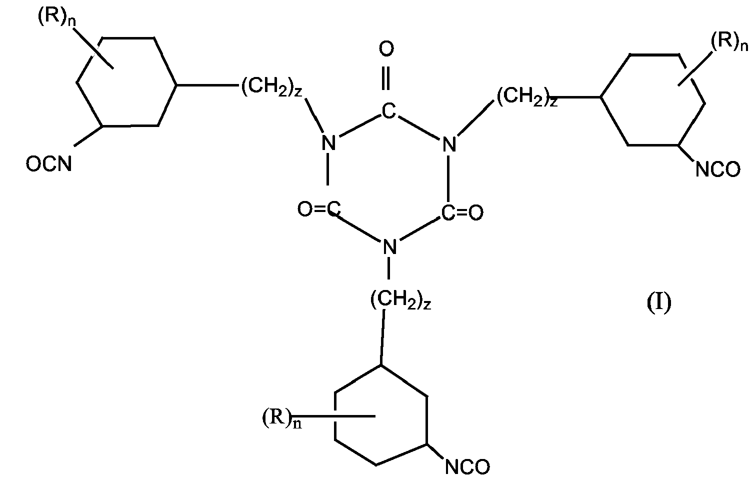 wherein each R is, independently from each other, a C₁-C₆ alkyl group, z is an integer from 0 to 6 and n is an integer from 0 to 10.

7. The two-part composition of claim 1, wherein said at least one polyisocyanate compound A₁ has formula (IA) :

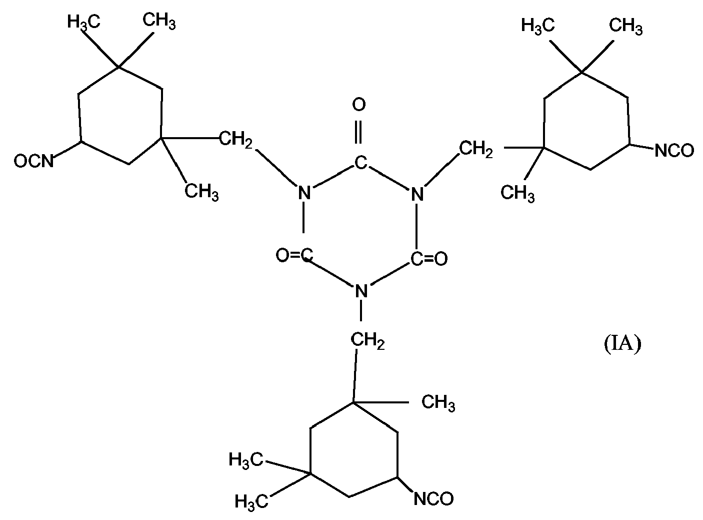

8. The two-part composition of claim 1, wherein said at least one polyisocyanate compound A1 comprises at least one isocyanate group linked to a nitrogen atom of said at least one isocyanurate cycle through a (CH₂)_{z} group, where z is an integer from 1 to 12.

9. The two-part composition of claim 8, wherein the three isocyanate groups are each linked to a nitrogen atom of said at least one isocyanurate cycle through a -(CH₂)_{z} - group.

10. The two-part composition of claim 9, wherein said at least one polyisocyanate compound A1 has formula (II) : 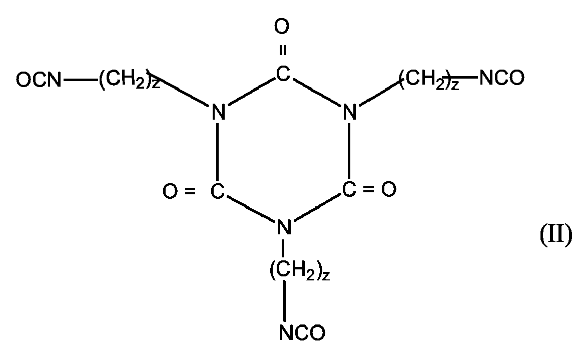 where z is an integer from 1 to 12.

11. The two-part composition of claim 10, wherein said at least one polyisocyanate compound has formula (IIA) :

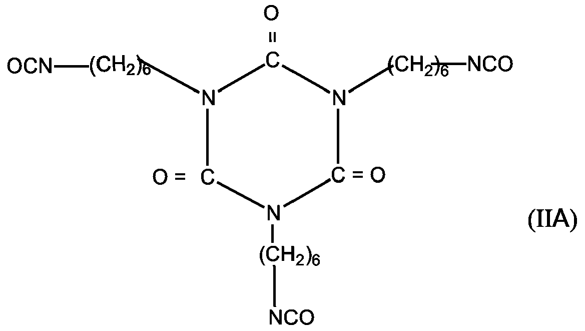

12. The two-part composition of claim 1, wherein said at least one diisocyanate compound A2 is selected from the group consisting of aromatic diisocyanates, aliphatic diisocyanates, cycloaliphatic diisocyanates and polycycloaliphatic diisocyanates.

13. The two-part composition of claim 12, wherein said at least one diisocyanate compound A2 is selected from the group consisting of compounds of formulas :

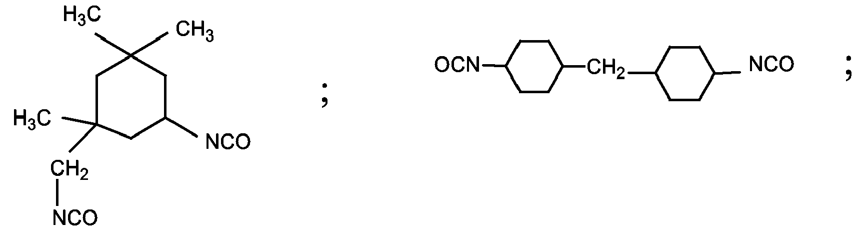

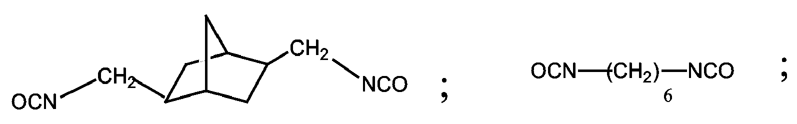

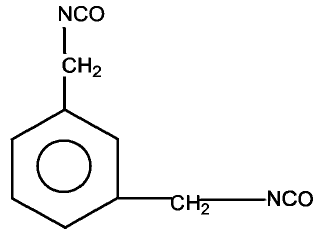

14. The two-part composition of claim 1, wherein first polyisocyanate part A comprises 10 to 90 parts by weight of said at least one polyisocyanate compound A1 and 90 to 10 parts by weight of said at least one diisocyanate compound A2, per 100 parts by weight of compounds A1 and A2.

15. The two-part composition of claim 1, wherein first polyisocyanate part A comprises 40 to 90 part of weight of said at least one polyisocyanate compound A1 and 60 to 10 parts by weight of said at least one diisocyanate compound A2, per 100 parts by weight of compounds A1 and A2.

16. The two-part composition of claim 1, wherein said second polyol part B comprises a mixture of polyols containing at least 50% by weight of diol compounds B1.

17. The two-part composition of claim 1, wherein said second polyol part B comprises exclusively diol compounds B1 as polyols.

18. The two-part composition of claim 1, wherein said at least one diol compound B1 is selected from the group consisting of alcanediols, cycloalkylenediols, polycycloalkylenediols, poly(oxyalkylene)diols, dihydroxylated polycaprolactones, polycarbonate diols, polytetrahydrofurans, alkoxylated bisphenols A, and dihydroxylated polyurethane prepolymers.

19. The two-part composition of claim 18, wherein said at least one diol compound B1 is : 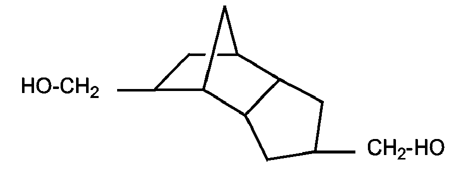 or

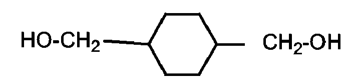

20. The two-part composition of claim 1, wherein the molar ratio NCO/OH ranges from 0.9 to 1.3, preferably 1 to 1.2.

21. A two-part polyisocyanate/polyol composition, curable upon mixing of the two parts for moulding casted products, which comprises :
- a first polyisocyanate part A, liquid at mixing temperature, comprising at least one first polyisocyanate compound A1 bearing at least three (3) isocyanate groups and having at least one isocyanurate cycle in its molecule, at least one isocyanate group of said first polyisocyanate compound A1 being linked, directly or indirectly, to a nitrogen atom of said at least one isocyanurate cycle through a cycloalkylene and/or polycycloalkylene group, at least one second polyisocyanate compound A1 bearing at least three (3) isocyanate groups and having at least one isocyanurate cycle in its molecule, at least one isocyanate group of said second polyisocyanate compound A1 being linked to a nitrogen atom of said at least one isocyanurate cycle through a (CH₂)_{z} group where z is an integer from 1 to 12 and at least one diisocyanate compound A2 ; and
- a second polyol part B comprising at least one diol compound B1.

22. The two-part composition of claim 21, wherein the cycloalkylene and/or polycycloalkylene groups are Cₓ-C_{y} cycloalkylene or polycycloalkylene groups which may be substituted by one or more alkyl groups.

23. The two-part composition of claim 21, wherein the three (3) isocyanate groups of said first polyisocyanate groups are each linked to a nitrogen atom of the isocyanurate cycle through a cycloalkylene or polycycloalkylene group and the three (3) isocyanate groups of said second polyisocyanate compounds A1 are each linked to a nitrogen atom of the isocyanurate cycle through a -(CH₂)_{z} - group.

24. The two-part composition of claim 21, wherein the first polyisocyanate compound has formula (I) : 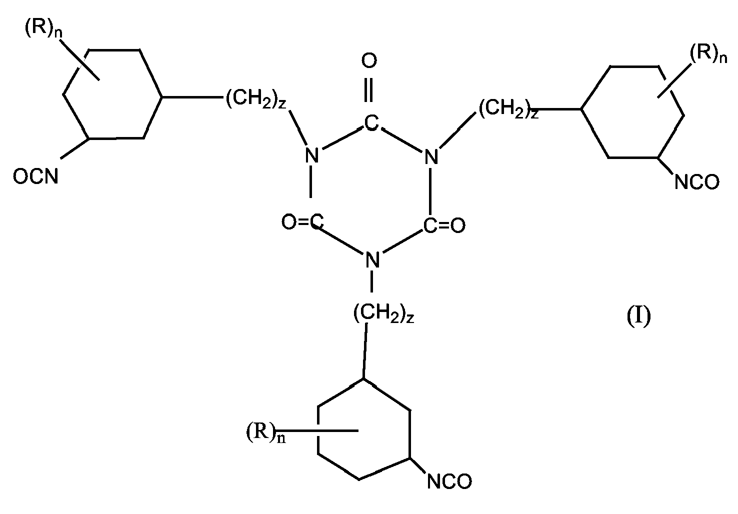 wherein each R is, independently from each other, a C₁-C₆ alkyl group, z is an integer from 0 to 6 and n is an integer from 0 to 10 and the second polyisocyanate compound has formula (II) : 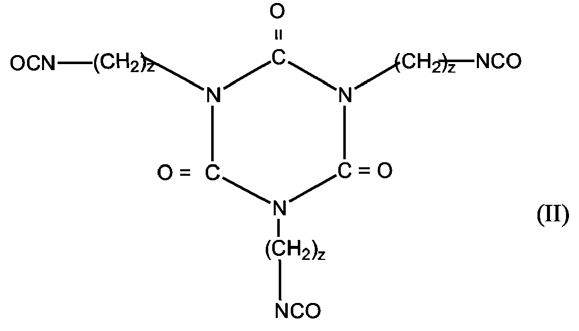 where z is an integer from 1 to 12.

25. The two-part composition of claim 21, wherein the first polyisocyanate compound has formula (IA) :

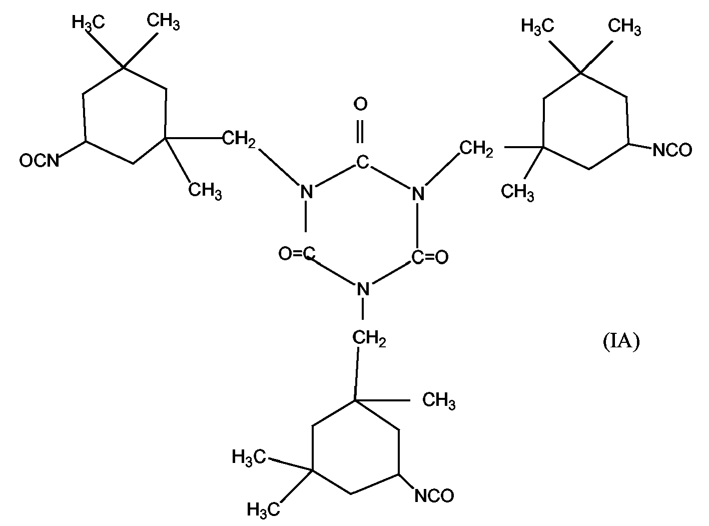

26. The two-part composition of claim 21, wherein said at least one diisocyanate compound A2 is selected from the group consisting of aromatic diisocyanates, aliphatic diisocyanates, cycloaliphatic diisocyanates and polycycloaliphatic diisocyanates.

27. The two-part composition of claim 21, wherein said at least one diisocyanate compound A2 is selected from the group consisting of compounds of formulas :

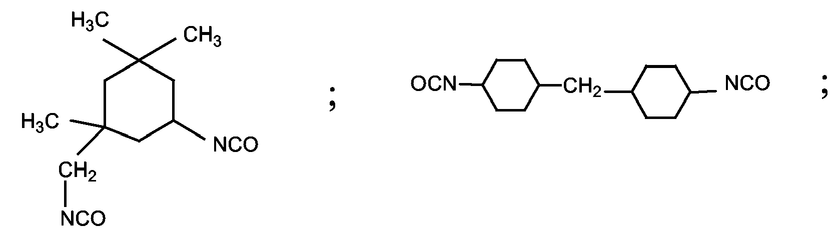

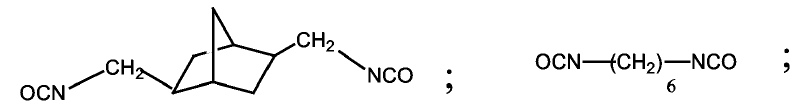

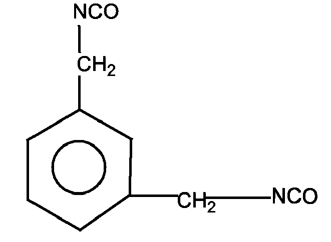

28. The two-part composition of claim 21, wherein first polyisocyanate part A comprises 10 to 90 by weight of said first and second polyisocyanate compounds A1 and 10 to 90 parts by weight of said at least one polyisocyanate compound A2, per 100 parts by weight of compounds A1 and A2.

29. The two-part composition of claim 21, wherein said first polyisocyanate part A comprises 40 to 90 parts of weight of said first and second polyisocyanate compound A1 and 60 to 10 parts by weight of said at least one diisocyanate compound A2, per 100 parts by weight of compounds A1 and A2.

30. The two-part composition of claim 21, wherein first polyisocyanate part A comprises 15 to 50 parts by weight of first polyisocyanate compounds A1 and 85 to 50 parts by weight of second polyisocyanate compounds A1 per 100 parts by weight of compounds A1.

31. The two-part composition of claim 21, wherein first polyisocyanate part A comprises 25 to 35 parts by weight of first polyisocyanate compounds A1 and 75 to 65 parts by weight of second polyisocyanate compounds A1 per 100 parts by weight of compounds A1.

32. The two-part composition of claim 21, wherein said second polyol part B comprises a mixture of polyols containing at least 50% by weight of diol compounds B1.

33. The two-part composition of claim 21, wherein said second polyol part B comprises exclusively diol compounds B1 as polyols.

34. The two-part composition of claim 21, wherein said at least one diol B1 is selected from the group consisting of alcanediols, cycloalkylenediols, polycycloalkylenediols, poly(oxyalkylene)diols, dihydroxylated polycaprolactones, polycarbonate diols, polytetrahydrofurans, alkoxylated bisphenols A, and dihydroxylated polyurethane prepolymers.

35. The two-part composition of claim 21, wherein said at least one diol compound B1 is : 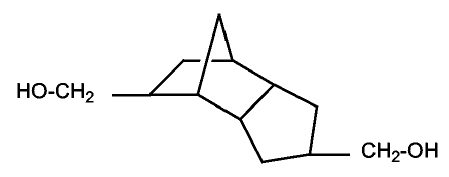 or

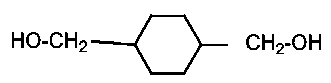

36. The two-part composition of claim 21, wherein the molar ratio NCO/OH ranges from 0.9 to 1.3, preferably from 1 to 1.2.

37. A process for making a casted article which comprises mixing and reacting in a mould first polyisocyanate part A and second polyol part B of the two-part composition of claim 1.

38. The process of claim 37, wherein mixing and reacting of first polyisocyanate part A and second polyol part B is effected by reaction injection moulding (RIM) process.

39. The process of claim 37, wherein said the casted article is an ophthalmic lens.

40. A process for making a casted article which comprises mixing and reacting in a mould first polyisocyanate part A and second polyol part B of the two-part composition of claim 21.

41. The process of claim 40, wherein mixing and reacting of first polyisocyanate part A and second polyol part B is effected by reaction injection moulding (RIM) process.

42. The process of claim 40, wherein the casted article is an ophthalmic lens.

43. The process of claim 41, wherein the polyisocyanate part A and polyol part B have each a dynamic viscosity ranging from 0.03 Pa.s to 0.3 Pa.s, when the mixing is implemented.

44. The process according to any one of claims 40 to 43, wherein the miscibility temperature of polyisocyanate part A and polyisocyanate part B is equal or less than the temperature of the two part composition when the mixing is implemented.
